Europäisches Patentamt

European Patent Office

Office européen des brevets

(11) Publication number: **0 001 307**
**A1**

(12) **EUROPEAN PATENT APPLICATION**

(21) Application number: **78200186.1**

(22) Date of filing: **11.09.78**

(51) Int. Cl.²: **C 09 D 3/14**
**C 08 L 53/02, H 01 B 3/00**
**H 01 B 1/04**

(30) Priority: **19.09.77 US 834581**

(43) Date of publication of application:
**04.04.79 Bulletin 79/7**

(84) Designated contracting states:
**BE CH DE FR GB NL SE**

(71) Applicant: SHELL INTERNATIONALE RESEARCH
MAATSCHAPPIJ B.V.
Carel van Bylandtlaan 30
NL-2596 HR DEN HAAG(NL)

(72) Inventor: Snyder, John Leonard
15711 Sandy Hill
Houston Texas 77043(US)

(74) Representative: Keuzenkamp, Abraham et al,
c/o Shell Internationale Research Maatschappij B.V. P.O.
Box 302
NL-2501 CH Den Haag(NL)

(54) A semi-conductive composition and an electric wire or cable coated with such a composition.

(57) A semi-conductive composition having an unobviously constant resistivity over a wide temperature range along with excellent deformation resistance, strength, toughness and moisture pick-up resistance comprises a selectively hydrogenated thermoplastic elastomeric block copolymer of a monoalkenyl or monalkenylidene arene and a conjugated diene, an essentially crystalline polypropylene, a hydrocarbon oil and a conductive carbon black having an $N_2$-adsorption surface area of greater than 800 m²/g and a pore volume of greater than 300 ml/100 g.

Such compositions are especially superior for use as semi-conductive insulators for electrical conductors designed to carry electric current under a high voltage.

FIG.1

EP 0 001 307 A1

Croydon Printing Company Ltd.

1

# A SEMI-CONDUCTIVE COMPOSITION AND AN ELECTRIC
# WIRE OR CABLE COATED WITH SUCH A COMPOSITION

The invention relates to a semi-conductive composition suitable for wire coating, which comprises a thermoplastic elastomer, a crystalline polypropylene, and a conductive carbon black. Further the invention relates to an electric wire or cable coated with such a composition.

Electric wires and cables that are designed to carry electric current under a high voltage usually comprise a core conductor which comprises one or more strands of a conductive material or alloy such as copper or aluminium, a semi-conductive layer, a layer of insulation, a second layer of a semi-conductive material and the jacket. The purpose of these semi-conductive layers is to drain off static electric charges or fault currents and to prevent corona deterioration of the insulation.

Semi-conductive compositions which are used as shielding materials for electrical conductors in high voltage wire and cable usually have been formed from ethylene polymers and conductive carbon black (cf. U.S. patent specification No. 3,591,871). These compositions possess the shortcoming that their resistivity changes with temperature, with temperature cycling and with flexing. The compositions disclosed in U.S. patent specification No. 3,591,871 are deficient because of the large amount of carbon black required. In addition, these known compositions suffer from a low deformation temperature, if processable.

Now, in accordance with the invention a semi-conductive composition is provided, which comprises:

(a)  100 parts by weight of a selectively hydrogenated thermoplastic elastomeric block copolymer having at least two terminal non-elastomeric polymer blocks A of a monoalkenyl or monoalkenylidene arene and at least one intermediate elastomeric polymer block B of an aliphatic conjugated diene hydrocarbon, each polymer block A having a number average molecular weight in the range of from 5,000 to 125,000, no more than 25% of the aromatic double bonds of polymer block A being hydrogenated, the polymer blocks A constituting from 8 to 55% by weight of the total block copolymer, each polymer block B having a number average molecular weight in the range of from 10,000 to 300,000 and at least 80% of the aliphatic double bonds of polymer block B being hydrogenated;

(b)  from 50 to 150 parts by weight of an essentially crystalline polypropylene having a melting point greater than $160^{\circ}C$;

(c)  from 0 to 150 parts by weight of a hydrocarbon oil, and

(d)  from 5 to 50 parts by weight of a conductive carbon black having an $N_2$-adsorption surface area of greater than $800 \ m^2/g$ and a pore volume of greater than 300 ml/100 g.

Semi-conductive compositions according to the invention possess an unobviously constant resistivity over a wide temperature range, an excellent deformation resistance, strength, toughness and moisture pick-up resistance.

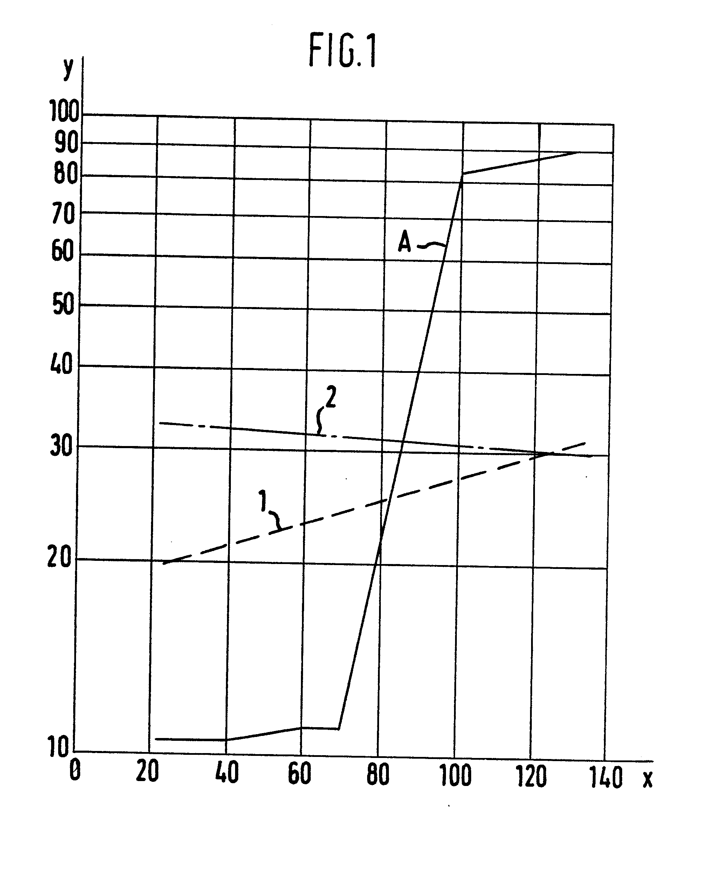

The resistivity versus temperature relationship is shown in Figure 1, in which the direct current volume resistivity expressed in Ohm-centimetre is plotted on the Y-axis and the temperature expressed in degrees centigrade is plotted on the X-axis. In Figure 1, A represents a curve for composition A which is a commercially available semi-conductive composition for wire coating comprising predominantly carbon black and a vulcanizable ethylene copolymer, and 1 and 2 represent curves for compositions 1 and 2 which are compositions according to the invention. As appears from Figure 1, composition A shows a dramatic increase in resistivity as the temperature increases beyond 70°C. Contrary to this known semi-conductive one, compositions 1 and 2 which are ones according to the invention reveal a much more constant relationship between resistivity and temperature. In fact, composition 2 surprisingly shows a reduction in resistivity with increased temperature.

The block copolymers present in the compositions according to the invention may be linear, radial or branched. Methods for the preparation of such polymers are known in the art. Particular reference will be made to the use of lithium-based catalysts and especially lithium-alkyls for the preparation of the precursor polymers (polymers before hydrogenation). The structure of the polymers is determined by their methods of polymerization. For example, linear polymers result by sequential introduction of the desired monomers into the reaction vessel when using such initiators as lithium-alkyls or dilithio-stilbene, or by coupling a two-segment block copolymer with a difunctional coupling agent. Branched structures, on the other hand, may be obtained by the use of suitable coupling agents having a functionality with respect to the precursor polymers of three or more. Coupling may be effected with multifunctional coupling agents, such as dihalo-alkanes or -alkenes and divinyl benzene as well as certain polar compounds, such as silicon halides, siloxanes or esters of monohydric alcohols with carboxylic acids. The presence of any coupling residues in the polymer may be ignored for an adequate description of the polymers forming a part of the compositions of this invention. Likewise, in the generic sense, the specific structures also may be ignored. The invention applies especially to the use of selectively hydrogenated polymers having the configuration before hydrogenation of the following species:

    polystyrene-polybutadiene-polystyrene (SBS)

    polystyrene-polyisoprene-polystyrene (SIS)

    poly(alpha-methylstyrene)-polybutadiene-poly(alpha-methylstyrene)    and

poly(alpha-methylstyrene)-polyisoprene-poly(alpha-methylstyrene)

It will be understood that both polymer blocks A and B may be either homopolymer or random copolymer blocks as long as each block predominates in at least one class of the monomers characterizing the blocks. Polymer block A may be a polymer block of styrene or of its analogue or homologue, e.g. alpha-methylstyrene or a ring-substituted styrene, particularly a ring-methylated styrene, preferably of styrene. The polymer blocks B may be homopolymer blocks of butadiene or isoprene and copolymers of one of these two dienes with a monoalkenyl arene as long as the polymer blocks B predominate in conjugated diene units. When the monomer employed is butadiene, it is preferred that between 30 and 60 mol.% of the condensed butadiene units in the butadiene polymer block have 1,2-configuration. Thus, when such a block is hydrogenated, the resulting product is, or resembles, a regular copolymer block of ethylene and butene-1 (EB). If the conjugated diene employed is isoprene, the resulting hydrogenated product is or resembles a regular copolymer block of ethylene and propylene (EP).

Hydrogenation of the precursor block copolymers is preferably effected by use of a catalyst comprising the reaction products of an aluminium alkyl compound with nickel or cobalt carboxylates or alkoxides under such conditions as to substantially completely hydrogenate at least 80% of the aliphatic double bonds of polymer block B while hydrogenating no more than 25% of the aromatic double bonds of polymer blocks A. Preferred block copolymers are those where at least 99% of the aliphatic double bonds of polymer block B are hydrogenated while less than 5% of the aromatic double bonds of polymer blocks A are hydrogenated.

The number average molecular weights of the individual polymer blocks may vary within certain limits. The terminal non-elastomeric polymer blocks A have number average molecular weights in the range of from 5,000 to 125,000, preferably from 7,000 to 60,000 while the intermediate elastomeric polymer blocks B have number average molecular weights in the range of from 10,000 to 300,000, preferably from 30,000 to 150,000. The total number average molecular weight of the block copolymer is preferably in the range of from 25,000 to 350,000, preferably from 35,000 to 300,000. These molecular weights are most accurately determined by tritium counting methods or osmotic pressure measurements.

The proportion of the terminal non-elastomeric polymer blocks A should be between 8 and 55% by weight, preferably between 10 and 30% by weight, of the total block copolymer.

The types of hydrocarbon oils useful in the composition according to the invention may be those oils ordinarily used in the processing of rubber and plastics, e.g., rubber-extending oils. Especially preferred are the types of oil that are compatible with the elastomeric polymer block of the block copolymer. While oils of higher aromatics content are satisfactory, those petroleum-based white oils having low volatility and less than 50% aromatics content as determined by the clay gel method of tentative ASTM-method D 2007 are particularly preferred. The oils may additionally have low volatility, preferably having an initial boiling point above 260°C. The amount of oil present in the composition according to the invention varies from 0 to 150 phr (parts by weight per hundred parts by weight of block copolymer), preferably 75 to 125 phr.

The polypropylene present in the composition according to the invention is the so-called isotactic polypropylene as opposed to atactic polypropylene. The number average molecular weight of the polypropylene is preferably in excess of 100,000 and the melting point is greater than 160°C. The polypropylene may be prepared in any suitable manner. Depending on the specific catalyst and polymerization conditions employed, the polymer produced may contain atactic as well as isotactic, syndiotactic or so-called stereo-block molecules. These may be separated, if desired, by selective solvent extraction to yield products of low atactic content that crystallize more completely. The preferred commercial polypropylenes are generally prepared using a solid, crystalline, hydrocarbon-insoluble catalyst made from a titanium trichloride composition and an aluminium alkyl compound, e.g., triethyl aluminium or diethyl aluminium chloride. If desired, the polypropylene employed may be a copolymer containing minor (1 to 20 percent by weight) amounts of ethylene or other alpha-olefin comonomers. The amount of the polypropylene present in the composition according to the invention varies from 50 to 150 phr, preferably from 75 to 125 phr.

The type of carbon black employed in the composition according to the invention is critical. By employing this particular carbon black it is possible to employ lower amounts of carbon black, therein permitting significant improvements in the properties of the blend. The carbon black employed herein should have an $N_2$-adsorption surface area of greater than 800 square metres per gram $(m^2/g)$ compared to values of less than 600 $m^2/g$ for certain channel black and less than 300 $m^2/g$ for certain furnace blacks and acetylene blacks. In addition, the pore volume should be greater than 300 millilitres per 100 grams, which value is greater than other commercial carbon blacks. A very useful carbon black is "KETJENBLACK" EC carbon black, which is a highly conductive, non-reinforcing furnace type carbon black. The amount of carbon black present in the composition according to the invention varies from 5 to 50 phr, preferably from 20 to 40 phr.

Other additives, such as extenders, anti-oxidants, copper stabilizers, U.V. stabilizers, and other additives may also be added. The additives that can be incorporated should be selected from those whose electrical properties are such as will not materially reduce or impair the electrical properties of the composition. The amount of such additives included in the composition will, of course, depend upon the particular block copolymer being employed and the ultimate use being made of the composition.

The various components may be combined in any suitable manner including solution blending, melt blending, and dry blending. The compositions according to the invention may then suitably be employed as semi-conductive wire coatings. These compositions are especially superior for use as semi-conductive insulators for electrical conductors not only because of their superior electrical properties, but also for their high degree of adherence to metallic surfaces without special treatment of such surface. The electrical conductors usually employed with the compositions according to the invention are metallic wires, such as copper, silver, aluminium, and alloys thereof.

The invention is further illustrated by reference to the following Examples, which are presented for the purpose of illustration only, and the invention is not to be limited to the particular ingredients and operating conditions disclosed.

EXAMPLE I

Two semi-conductive compositions were prepared. In both cases the block copolymer was a selectively hydrogenated styrenebutadiene-styrene block copolymer, the oil was a standard hydrocarbon rubber processing oil, the polypropylene was essentially crystalline polypropylene and the carbon black was "KETJENBLACK" EC carbon black. The relative amounts of the ingredients are listed below in parts by weight:

|  | No. 1 | No. 2 |
|---|---|---|
| Block copolymer | 100 | 100 |
| Oil | 2 | 100 |
| Polypropylene | 100 | 100 |
| Carbon black | 28 | 28 |
| Additives | 2 | 2 |
| Total | 232 | 330 |

The resulting compositions were subjected to a variety of standard electrical tests. The resistivity in Ohm-centimetres was measured at various temperatures and the values plotted in Figure 1. Composition A is a known semi-conductive material comprising primarily carbon black and a vulcanizable ethylene copolymer. As seen in Figure 1, contrary to the known one, the compositions according to the invention possess a relatively

constant level of resistivity at various temperatures.

The deformation of the compositions 1 and 2 under 2,000 gram weight was measured at various temperatures. The values below, reported as a percentage, reveal the excellent deformation characteristics of the present compositions:

| Composition | No. 1 | No. 2 |
|---|---|---|
| Deformation at $90^\circ C$, | 1.2 | 4.7 |
| $100^\circ C$ | 2.1 | 7.0 |
| $120^\circ C$ | 2.1 | 10.0 |
| $130^\circ C$ | 2.2 | 11.5 |
| $150^\circ C$ | 9.3 | 34.6 |

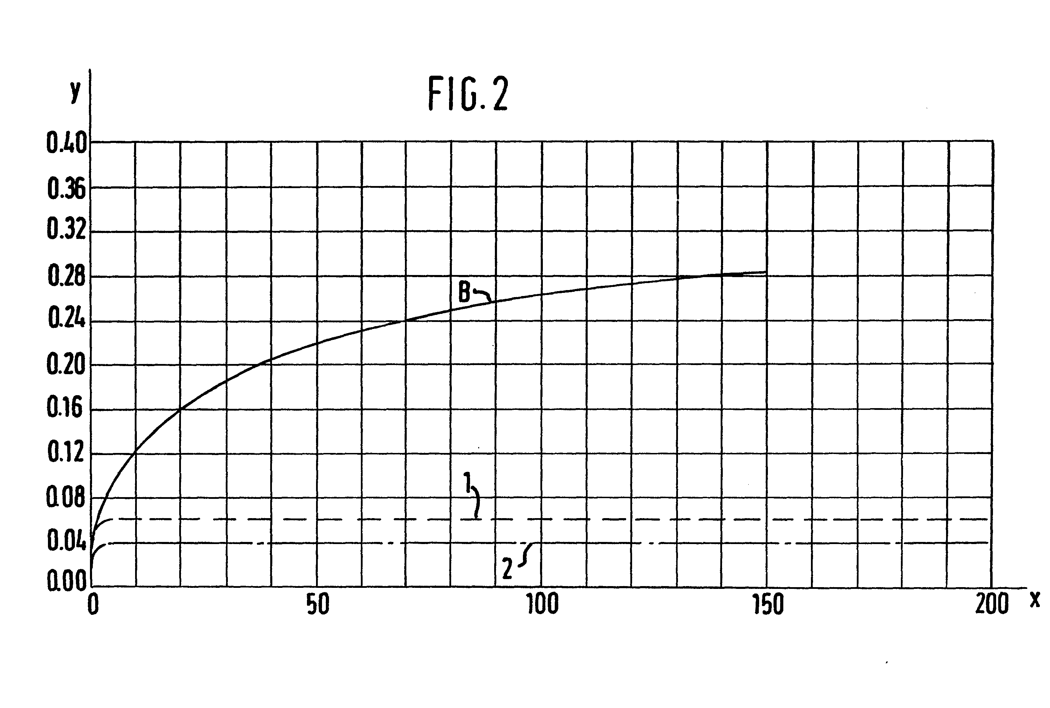

In addition, the deliquescence of the compositions 1 and 2 in comparison with that of a known semi-conductive composition B were measured at $23^\circ C$ and 50% relative humidity as a function of time. In Figure 2, the moisture expressed in percentages gained by the composition under examination is plotted on the Y-axis and the time expressed in hours is plotted on the X-axis. The results of the measurements of the deliquescence of the composition B, 1 and 2 are represented by the curves B, 1 and 2, respectively. As appears from Figure 2, the compositions 1 and 2 possess excellent resistance to moisture pick-up.

BAD ORIGINAL

1

## C L A I M S

1. A semi-conductive composition suitable for wire coating, which comprises a thermoplastic elastomer, a crystalline polypropylene, and a conductive carbon black, characterized in that the composition comprises:

(a) 100 parts by weight of a selectively hydrogenated thermoplastic elastomeric block copolymer having at least two terminal non-elastomeric polymer blocks A of a monoalkenyl or monoalkenylidene arene and at least one intermediate elastomeric polymer block B of an aliphatic conjugated diene hydrocarbon, each polymer block A having a number average molecular weight in the range of from 5,000 to 125,000, no more than 25% of the aromatic double bonds of polymer block A being hydrogenated, the polymer blocks A constituting from 8 to 55% by weight of the total block copolymer, each polymer block B having a number average molecular weight in the range of from 10,000 to 300,000 and at least 80% of the aliphatic double bonds of polymer block B being hydrogenated;

(b) from 50 to 150 parts by weight of an essentially crystalline polypropylene having a melting point greater than $160^{\circ}C$;

(c) from 0 to 150 parts by weight of a hydrocarbon oil, and

(d) from 5 to 50 parts by weight of a conductive carbon black having an $N_2$-adsorption surface area of greater than 800 $m^2/g$ and a pore volume of greater than 300 ml/100 g.

2.    A semi-conductive composition as claimed in claim 1, characterized in that less than 5% of the aromatic double bonds of polymer blocks A and at least 99% of the aliphatic double bonds of polymer block B are hydrogenated.

3.    A semi-conductive composition as claimed in claim 1 or 2, characterized in that the terminal non-elastomeric polymer blocks A have number average molecular weights in the range of from 7,000 to 60,000, their proportion is between 10 and 30% by weight of the total block copolymer, and the intermediate elastomeric polymer block B has a number average molecular weight in the range of from 30,000 to 150,000.

4.    A semi-conductive composition as claimed in any one of the preceding claims, characterized in that the hydrocarbon oil is a petroleum-based white oil having an initial boiling point above 260°C and less than 50% aromatics content as determined by the clay gel method of tentative ASTM-method D 2007.

5.    A semi-conductive composition as claimed in any one of the preceding claims, characterized in that the amount of the hydrocarbon oil is in the range of from 75 to 125 parts by weight per 100 parts by weight of block copolymer.

6.    A semi-conductive composition as claimed in any one of the preceding claims, characterized in that the amount of the polypropylene is in the range of from 75 to 125 parts by weight per 100 parts by weight of block copolymer.

7.    A semi-conductive composition as claimed in any one of the preceding claims, characterized in that the amount of carbon black is in the range of from 20 to 40 parts by weight per 100 parts by weight of block copolymer.

8.    An electric wire or cable coated with a semi-conductive composition as claimed in any one of the preceding claims.

FIG.1

FIG.2

## 0001307

**European Patent Office**

# EUROPEAN SEARCH REPORT

Application number

EP 78 20 0186

| Category | Citation of document with indication, where appropriate, of relevant passages | Relevant to claim |
|---|---|---|
| | **DOCUMENTS CONSIDERED TO BE RELEVANT** | |
| X | FR - A - 2 286 169 (RAYCHEM) <br> * Claims; page 10, paragraphs 2-4; page 14, paragraph 2 to page 15, paragraph 1 * <br><br> --- | 1,7 |
| X | FR - A - 2 271 640 (UNION CARBIDE) <br> * Claims * <br><br> --- | 1 |
| X | US - A - 3 970 771 (S. DAVISON) <br> * Claims * <br><br> --- | 1 |
| X | DE - A - 2 554 944 (KABEL- und METALLWERKE) <br> * Claims * <br><br> --- | 1 |
| X | US - A - 3 830 767 (N.J. CONDON) <br> * Claims * <br><br> ----- | 1 |

**CLASSIFICATION OF THE APPLICATION (Int. Cl.²)**

C 09 D 3/14
C 08 L 53/02
H 01 B 3/00
1/04

**TECHNICAL FIELDS SEARCHED (Int.Cl.²)**

C 09 D 3/14
C 08 L 53/02
H 01 B 3/00
1/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 01-12-1978 | FOUQUIER |

EPO Form 1503.1  06.78